Europäisches Patentamt

European Patent Office

Office européen des brevets

(11) Publication number: **0 454 262 A1**

# EUROPEAN PATENT APPLICATION

(21) Application number: **91200982.6**

(22) Date of filing: **25.04.91**

(51) Int. Cl.⁵: **H04M 1/68**

(30) Priority: **26.04.90 NL 9001003**

(43) Date of publication of application:
**30.10.91 Bulletin 91/44**

(84) Designated Contracting States:
**AT BE CH DE DK ES FR GB GR IT LI LU NL SE**

(71) Applicant: **Koninklijke PTT Nederland N.V.**
**P.O. Box 95321**
**NL-2509 CH The Hague(NL)**

(72) Inventor: **Christen, Johannes Nicolaas**
**6 Datheenhove**
**NL-2717 WC Zoetermeer(NL)**

(54) **Electronic circuit for signalling and/or preventing improper use of a telephone subscriber line.**

(57) The invention relates to a circuit (1) for signalling and/or combating improper line seizure of a telephone subscriber line having wire pair (a, b) from a telephone set (14) inserted on the line. To distinguish between line seizure from the subscriber's set (2) and an inserted set (14), the circuit (1) comprises both a loop voltage detector (4) and a loop current detector (6). The emission of a line signal generated by a signal generator (10) to the subscriber line (a, b) is regulated with the signals emitted by the detectors (4) and (6). The line signal is preferably an audible interference signal which renders telephone calls unintelligible and, in addition, is able to scramble digit information originating from an inserted tone touch dial set thoroughly. By adding a loop current delay circuit (15) which brings about an artificial prolonging of the loop current, it is possible, in addition, to scramble digit information originating from an inserted pulse touch dialling set. The regulation of the emission of the line signal can be combined with the setting (S1, S2) of a key switch (131) which can be operated with a telephone lock key.

fig.1

## A. Background of the invention

### 1. Field of the invention

The invention is in the field of protecting telephone subscriber lines against unauthorised use. More particularly, the invention relates to a circuit for signalling and/or preventing improper use of a telephone subscriber line.

### 2. Prior Art

European Patent Applications EP 0126496 and EP 0310512 disclose a circuit which is described as an 'electronic padlock' and which renders impossible the establishment of unauthorised calls not only from telephone sets inserted without permission but even from the subscriber's set. This known circuit can be fitted at any desired position across the wire pair of the subscriber line in parallel with the subscriber's set. It is a circuit which, depending on a line condition signal emitted by a loop detector, may be in two states in which digit information transmitted after the line has been seized is or is not prevented from reaching the telephone exchange. The digit information may in fact reach the circuit and can be analyzed by the latter and compared with a preset code. Only if the code is recognised is the state assumed in which the digit information is able to reach the exchange. However, this has the disadvantage that, before dialling a connection, the actual dialling information always has to be preceded by said special code. This known circuit is furthermore fairly complicated. In addition, in the admittedly exceptional case that the code might have been leaked, it is not possible to establish whether the telephone call is being made from the subscriber's set or from a set inserted without permission.

## B. Summary of the invention

The invention meets these objections. It relates to an electronic circuit for signalling and/or preventing improper use of a telephone subscriber line, comprising a first loop detector in a parallel circuit across the subscriber line, which loop detector emits a first line condition signal in accordance with the seizure condition of the line and, for this purpose, has the characteristic in accordance with Claim 1.

With such a circuit which is sited partly across and partly in the wire pair, in principle in the vicinity of the connecting point of the subscriber's set, it is possible to distinguish whether line seizure is taking place from the subscriber's set or from an instrument possibly inserted without permission. It is only in the latter case that the line signal is emitted. Line seizure from an instrument inserted without permission is in general involved if a loop voltage change can nevertheless be detected in the absence of a loop current from the subscriber's set. Preferably, the invention therefore has the characteristic in accordance with Claim 2.

In a further preferred embodiment, the line signal comprises an interference tone. By this is meant a signal with a frequency spectrum and intensity such that normal telephone calls are disturbed in an unintelligible manner. Said interference tone has the additional advantage that, if a tone touch dialling telephone set is used, even the digit information which is transmitted in the case of such a set in the form of short tones on the line is thoroughly garbled, with the result that a telephone connection corresponding to the digit information cannot even be established. In order to achieve this also for telephone connections which are set up from a pulse touch dialling set inserted without permission, the circuit of a preferred embodiment is furthermore provided with means which delay the interruption of a loop current present on the subscriber line if a signal generator is switched on. This implies that dialling pulses originating from such a pulse touch dialling set are garbled in a manner such that they cannot be recognised as such in the telephone exchange.

If the invention prevents the establishment of unauthorised calls on the subscriber line in most cases, in all other cases, the unpermitted use is prevented by disturbing telephone calls established by such use.

The circuit preferably comprises supply means which supply the signal generator from the subscriber line. For this purpose, the invention furthermore has the characteristic in accordance with Claim 5.

In a further preferred embodiment, the supply is switched on when the first loop detector detects seizure, but the tone signal is only released for emission to the line if the second loop detector does not detect any seizure. For this purpose, the circuit moreover has the characteristic according to Claim 6.

Improper use from the subscriber's own set and from any extensions connected in parallel therewith can be prevented by combining the circuit according to the invention with a telephone lock. As long as a suitable key is not set to a particular position in the telephone lock, the subscriber's own set and said extensions are regarded as sets inserted without permission. For this purpose, the circuit according to the

EP 0 454 262 A1

invention preferably has the characteristic in accordance with Claim 7.

In order to be able to conduct incoming calls in all cases, the circuit according to the invention preferably also incorporates a bell voltage detection circuit which, depending on a detected bell voltage and the second line condition signal, emits a third line condition signal which concomitantly controls the gate switch. This control takes place in a manner such that the tone signal is not delivered to the line as long as the second loop detector detects seizure after a detected bell voltage. This has the advantage that incoming calls can always be made without the interfering signal.

Characteristic of the invention is the fact that the emission of the line signal to the line is in fact regulated by the first line condition signal, but always depending on the second line condition signal. This dependence can be achieved in various ways by causing the second line condition signal to intervene in said regulation at various points in the circuit.

For the abovementioned combination of the circuit with a telephone lock, it is important that this intervention takes place as near as possible to the point of emission of the line signal onto the line. In other cases, it is preferable to cause the second line condition signal to intervene earlier, either so that it switches the supply line in combination with the first line condition signal or so that it regulates the emission of the first line condition signal.

## C. References

(1) European Patent Publication EP 0126496-A2;
Title: Electronic padlock for a subscriber telephone line.
(2) European Patent Publication EP 0310512-A1;
Title: Device for protecting the active dipole telephone line.

## D. Short description of the drawing

The invention will be explained below with reference to a drawing comprising:

Fig. 1    a block diagram of a circuit according to the invention,

Fig. 2    a diagram of an electronic circuit shown corresponding to the block diagram of the circuit 1 in Figure 1,

Fig. 3    a block diagram of a more elaborate switch circuit for replacing the gate switch 13 in the block diagram according to Figure 1, and

Fig. 4    a diagram of an electronic circuit corresponding to the block diagram of Figure 3.

## E. Description of figures

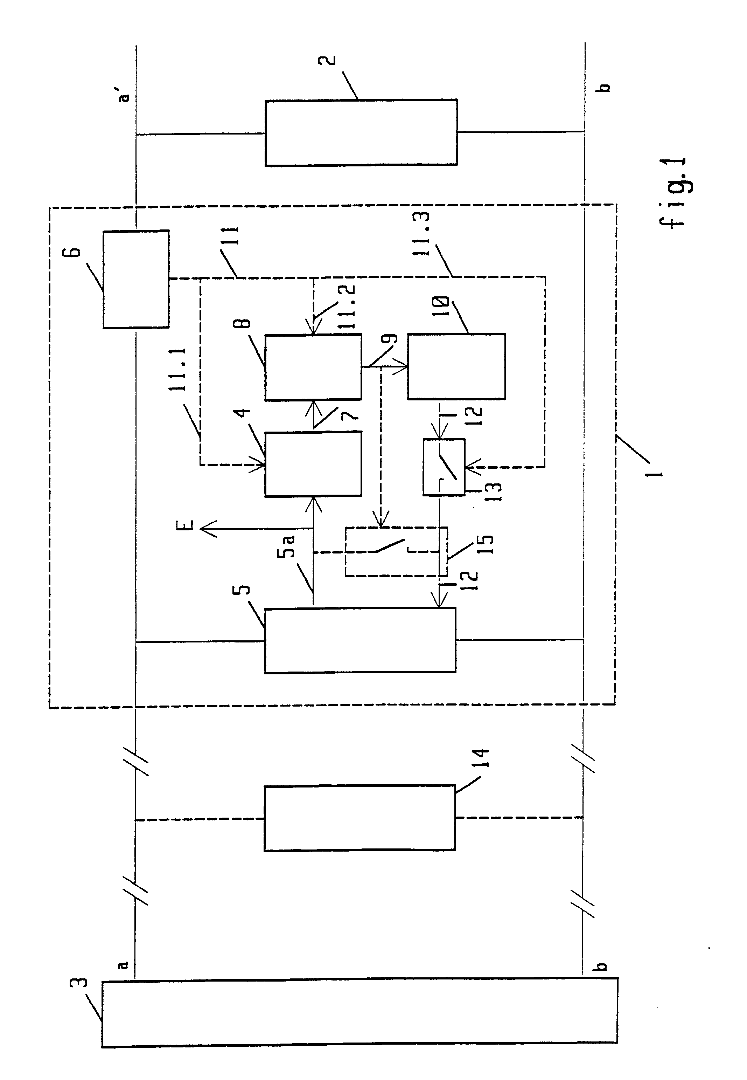

Figure 1 shows, as a block diagram, a circuit according to the invention and the way in which it can be connected to a subscriber line. Said circuit, indicated by 1, is connected in the vicinity of a subscriber's set 2 across a wire pair (a, b) of a subscriber line which connects the subscriber's set 2 to a telephone exchange 3. The circuit 1 comprises a loop voltage detector 4. Said loop voltage detector 4 is connected via a connection line 5a to a direct voltage bridge 5 which connects the loop voltage detector 4 in parallel across the wire pair (a, b). The switch 1 furthermore comprises a loop current detector 6, incorporated in one of the wires, for example a - a', for detecting the seizure state of the line and of the subscriber's set 2, respectively. The incorporation of a direct voltage bridge is the standard way of rendering the downstream circuit insensitive to polarity transpositions. The polarities of the direct voltage bridge 5 are indicated by a + and - sign. The loop voltage detector 4 is connected via a first detection signal line 7 to a supply switch 8 with which a supply line 9 to which a signal generator 10 is connected, can be switched on/off. The signal generator 10 has a signal connection 12 to the direct voltage bridge 5 for emitting a tone signal TS generated by it to the wire pair (a, b). Said signal connection 12 runs via a gate switch 13. The loop current detector 6 is connected via a second detection signal line 11 either to the loop voltage detector 4 (broken line 11.1), or to the supply switch 8 (broken line 11.2) or to the gate switch 13 (broken line 11.3). Via the first detection signal line 7, the loop voltage detector 4 emits a loop voltage condition signal LVS which is an indication of a subscriber line loop voltage if the latter is (at any point whatsoever on the subscriber line) or is not seized. The said LVS signal is used to regulate the supply of the signal generator 10, and consequently the emission of the tone signal TS to the subscriber line, by switching the supply switch 8. Via the second detection signal line 11, the loop current detector 6 emits a loop current condition signal LCS which is an indication of a loop current as a consequence of seizure of the subscriber line from the (authorised) subscriber's set 2 or from any extension connected in parallel across the wire pair (a', b). The

3

loop current condition signal LCS is used to intervene in the regulation of the emission of the tone signal TS. Three possibilities are indicated for this in the figure by the broken lines 11.1, 11.2 and 11.3, i.e.:

(11.1): the LCS signal regulates the emission of the LVS signal to the supply switch 8;

(11.2): the LCS signal concomitantly influences the switching of the supply switch 8;

(11.3): the LCS signal regulates, via the gate switch 13, the final emission of the tone signal TS via the signal connection 12.

Which of these possibilities, separately or in combination, is preferred under what circumstances will be explained below.

The tone signal is therefore emitted to the subscriber line depending on the condition signals LVS and LCS. This dependence is so chosen that said tone signal is only emitted if the condition signal LVS does, and the condition signal LCS does not, indicate seizure. This is the case if seizure occurs from a telephone set 14 which is connected without authorisation to the subscriber line between the telephone exchange 3 and the switch 1. In this way it is possible to distinguish unambiguously between seizure of the subscriber line from the authorised subscriber's set 2 or any downstream extensions and seizure from the unauthorised inserted telephone set 14. The signal generator 10 is preferably such that it emits a signal TS having a frequency spectrum which is not only situated in the speech band, with the result that telephone calls can be unintelligibly disturbed, but that, in addition, it has a disturbing effect on the tone frequencies of the dialling information originating from a tone touch dialling telephone set. The latter prevents recognition of the dialling information by the telephone exchange 3 and consequently foils any attempt to set up a call from such an inserted telephone set, while the former renders any call nevertheless established from an inserted set really quite unattractive. In order to foil attempts to set up calls of the pulse touch dialling type from an inserted telephone set as well, a loop current delay circuit 15 is also preferably incorporated between the connecting line 5a and the signal connection 12, which circuit 15 is supplied from the supply line 9. This loop current delay circuit 15 is switched on if the supply line is switched on, that is to say if there is a loop current across the wire pair (a, b) as a consequence of a line seizure from a set 14. In that state, the circuit 15 maintains a status in which the tone signal TS is emitted via the signal connection 12 to the subscriber line (a, b). If an attempt is made to interrupt the loop current by said set 14, the switch circuit 15 no longer transmits the tone signal TS, but nevertheless still artificially maintains the loop current for some time. Sine the dialling information from a pulse touch dialling set is generated by interruptions of the loop current which are precisely defined in time duration, such a delay results in garbling of any dialling pulse, with the result that the dialling information is no longer recognisable as such.

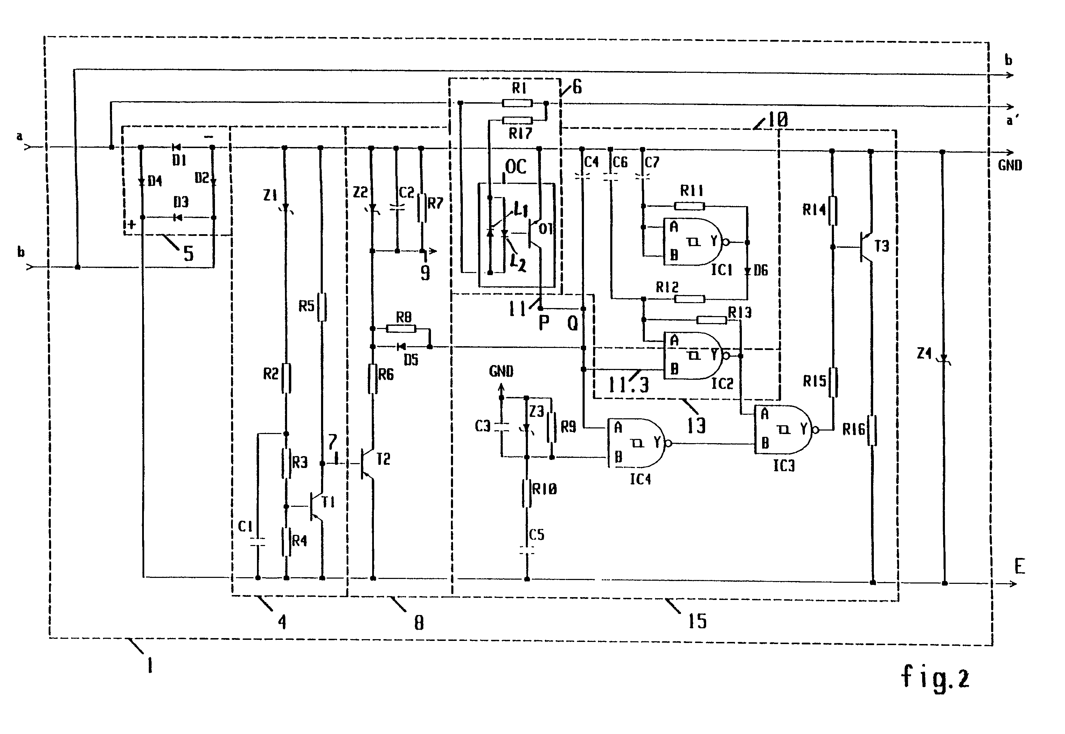

Figure 2 shows a diagram of an electronic circuit corresponding to the block diagram of the circuit 1 in Figure 1. In this diagram, every group of electronic components which functionally corresponds to a block in the block diagram of Figure 1 has been framed as far as possible by a broken dashed line and numbered correspondingly. In the electronic circuit according to Figure 2, the b wire of the wire pair (a, b) is fed directly to the subscriber's set; the a wire is, however, connected via a resistor R1. Connected in parallel with said resistor R1 and in series with a resistor R17 are two LEDs L1 and L2 which belong to an "optocoupler" OC. Said optocoupler OC furthermore comprises a transistor OT which can conduct if L1 or L2 is emitting light. The value of R1 is so chosen that there is just enough voltage drop present for conduction if the subscriber's set 2 is producing loop current. Incorporated in parallel across the wire pair (a, b) at the input side of the circuit 1 is the direct voltage bridge 5 which is formed by diodes D1, D2, D3 and D4. Immediately downstream of it is the loop voltage detector 4 formed by a transistor T1 together with a zenerdiode Z1, resistors R2, R3, R4 and R5, and capacitor C1. The polarity + defines a line E and the polarity - a line GND. Downstream of the loop voltage detector 4 is the supply switch 8, formed by a transistor T2, a zenerdiode Z2, a capacitor C2 and resistors R6 and R7. In said supply switch 8, the transistor T2 forms the actual switching component. In the quiescent state there is a quiescent voltage of approximately 48 volts on the subscriber line. The value of the zenerdiode Z1 is so chosen for the loop voltage detector 4 that, in said quiescent state, a current flows via the resistors R2 and R3 to the base of the transistor T1, as a result of which the latter conducts. There is then approximately 30 volts across the zenerdiode Z1. The collector of the transistor T1 is connected to the base of the transistor T2. As a result of the conduction of T1, no base current can flow through the transistor T2. T2 only starts to conduct if the zenerdiode Z1 can no longer keep the transistor T1 conducting, which happens if the subscriber line is seized at any point whatsoever and the voltage of the subscriber line drops below the voltage across the zenerdiode Z1. A base current can then start to flow through the transistor T2 via resistor R5. In that situation, the voltage on the subscriber line is approximately 7 volts, depending, however, on the distance between the telephone exchange 3 and the subscriber's set 2. Said voltage of approximately 7 volts is sufficient to deliver, via the resistor R7 on the supply line 9, a supply voltage to four 'Schmit triggers' IC1, IC2, IC3 and IC4 arranged as NAND gates and each having inputs A and B and output Y. As a result of mutually coupling the A and B inputs of the gate IC1, this gate is wired as an inverter. For the inputs and outputs of the four gates it is the case that a relatively high voltage corresponds to a logical "1" and a relatively low voltage corresponds to a logical "0". The zenerdiode Z2 limits the supply voltage on the supply line 9 to approximately 5 volts, and the capacitor/ resistor combination (C2, R7) absorbs slow variations in said supply voltage.

The optocoupler OC and the resistor R1 and R17 together form the loop current detector 6.

The signal generator 10 comprises the NAND gates IC1 and IC2, capacitors C4, C6 and C7, resistors R11, R12 and R13, and a diode D6. These components are so wired that, provided they are supplied from the supply line 9, they are able to generate as tone signal TS an interference signal composed of two tones of different frequency, rhythmically alternating with one another. This is achieved as follows. Since the NAND gates IC1 and IC2 are in fact Schmit triggers, which means that the output level is dependent on the voltage level at the input, albeit with a certain hysteresis, they can be separately wired as a tone generator by feeding back the output via a resistor to the input and connecting one or both inputs via a capacitor to the 'zero' level (denoted in Figure 2 by GND). For IC1 this is achieved by the resistor R11 and the capacitor C7, respectively, the two inputs A and B also being coupled; in the case of IC2, this is achieved solely for the input A by the resistor R13 and the capacitor C6. These separate tone generators are coupled to form a composite tone generator 10 because the output of IC1 is emitted via the diode D6 and the resistor R12 to the input A of IC2. The two tone frequencies are generated by the gate IC2 with time constants determined by the capacitor C6 and the resistors R12 and R13 depending on whether the diode D6 is or is not conducting. The rhythm with which these two frequencies alternate with each other is generated by the gate IC1 with a time constant determined by the capacitor C7 and the resistor R11.

The other input B of the gate IC2 is used to switch the tone generator formed by the two IC1 and IC2 coupled in this way on and off. This takes place by supplying a "0" ('off') or a "1" ('on') to said input B. This in fact achieves the function of the gate switch 13 in Figure 1. To release the tone signal generated by the signal generator 10, the input B of the gate IC2 is connected to the transistor OT of the optocoupler OC. This corresponds to the abovementioned possibility (11.3) in which the emission of the tone signal TS is regulated by the second loop current condition signal LCS. If line seizure takes place from the set 14, no current can flow through one of the LEDs L1 or L2 of the optocoupler OC. The input B of the gate IC2 is fed a "1" after the supply line 9 is switched on by the supply switch 8, with the result that the tone signal TS generated by the signal generator 10 is fed to the output of the gate IC2. In order to prevent the transistor T2 conducting after the supply switch 8 is switched on, the input B of gate IC2 becoming "1" too early and consequently, the signal generator 10 being switched on too early, even before the voltage of the supply line 9 is at the desired level, the input B is, in addition, also connected via the capacitor C4 to the "zero" level GND and via the resistor R8 to the voltage-level-limiting zenerdiode Z2 of the supply switch 8. As a result of this, after the supply switch 8 is switched on, the level of the input B of IC2 is still held for a short time (virtually approximately 1 sec) at the low level "0", as a result of which the supply voltage of the supply line 9 acquires an opportunity to become approximately 5 volts via the capacitor C2. This ensures a stable operation.

The loop current delay switch 15 comprises the NAND gates IC3 and IC4, the zenerdiode Z3, the transistor T3, the capacitors C3 and C5 and the resistors R9, R10, R14, R15 and R16. If there is a question of line seizure from a set 14 inserted without permission, the supply line 9 and, consequently also the signal generator 10, is switched on. The tone signal TS is on the input A of the gate IC3. In said seizure state of the line, the resistor R9 keeps the input B of the NAND gate IC4 at the low level "0", with the result that the output of the gate IC4, and consequently the input B of the gate IC3 are kept at the high level "1". The tone signal, which is in fact a bouncing back and forth between the levels "0" and "1" of the input A of gate IC3, then emerges in inverted form at the output Y of gate IC3 and is then emittted to the subscriber line via the resistor R15, the transistor T3, the resistor R16 and the direct voltage bridge 5. If the set 14 is of the tone touch dialling type, a suitably chosen tone signal TS can thoroughly garble the dialling information originating from such a set, with the result that it is not possible to set up a connection therefrom. If the set 14 is of the pulse touch dialling type, the dialling pulses are sent via the line in the form of loop current interruptions of well-defined duration. In that case, the voltage across the wire pair (a, b) rises during every dialling pulse. As a result, the input B of the gate IC4 is fed a high level, that is to say a "1", limited by the zenerdiode Z3 via capacitor C5 and resistor R10. There was also a "1" on the input A of the gates IC4, as a result of which the output Y of IC4, and consequently the input B of the gate IC3, is now brought to "0". This has the result that the emission of the tone signal TS to the subscriber line is stopped and the output of the gate IC3 goes to the high level "1". This high level still keeps the transistor T3 conducting for a short time via resistor R15, with the result that a current still continues to flow via R16 and this is still seen as a loop current in the telephone exchange. If they even reach the telephone exchange 3, the given dialling pulses in any case arrive in such a garbled state that they can no longer be detected as dialling pulses.

Only in the event of permitted seizure from the subscriber's set 2 is the tone signal TS not emitted to the line. This can be understood as follows. If line seizure takes place from the subscriber set 2, the supply switch 8 will switch the supply line 9 on. But, in addition, a current will start to flow through one of the two LEDs L1 and L2 of the optocoupler OC. The transistor OT of the optocoupler OC consequently becomes conducting and transmits a low level "0" to the inputs B and A, respectively, of the gates IC2 and IC4. As a result, the signal generator 10 remains switched off and the input Y of the gate IC3 receives a low level ("0") with the result that no base current is transmitted to the transistor T3. This means that dialling information can always be emitted unhindered to the line from a subscriber's set 2, whether it is of the tone touch dialling type or of the pulse touch dialling type and an established connection is not disturbed. Finally, a zenerdiode Z4 is also incorporated across the direct voltage bridge 5 between the lines E and GND to protect the circuit 1 against excessively high voltages on the subscriber line (a, b), for example as a result of induction.

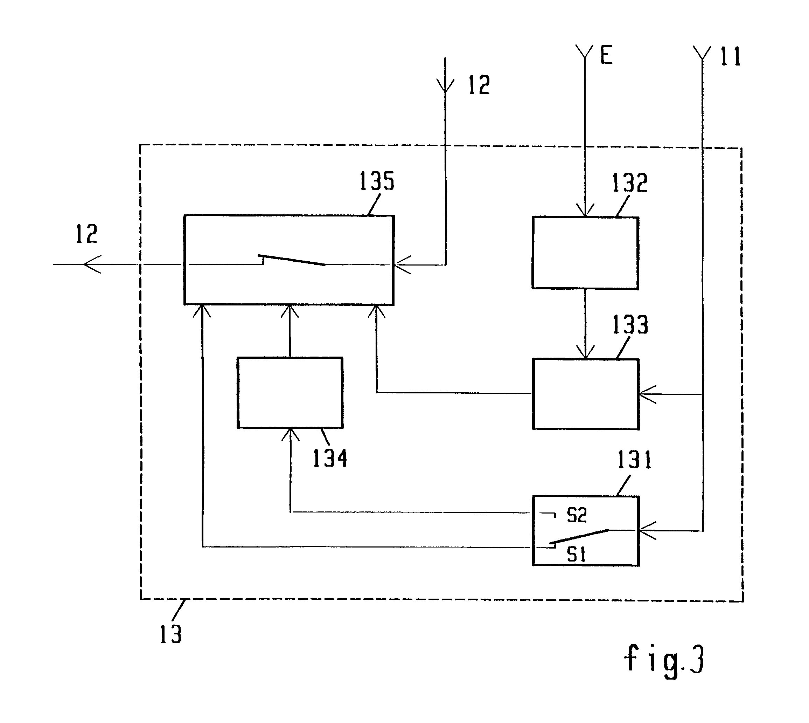

In the exemplary embodiment described above, the final emission of the tone signal TS to the subscriber line (a, b) is only dependent on whether or not the loop current condition signal LCS which, fed via line 11.3, regulates the setting of the gate switch 13, is present. In a subsequent exemplary embodiment this regulation takes place, in addition, in combination with the setting of a key in a telephone lock with which the subscriber's set is provided and with which it can be released for use or not according to the key setting. This takes account of the requirement that incoming telephone calls must always be capable of being conducted, unless there is a question of a set inserted without permission. To achieve this, the gate switch 13 is replaced by a more elaborate switch circuit, of which Figure 3 shows a block diagram. The more elaborate switch circuit comprises:

- a key switch 131 which can be in one of two states S1 or S2 corresponding to the setting of a key in a telephone lock (not shown); the key setting to which state S1 corresponds signifies for the subscriber's set 2 (Figure 1) that it is available for outgoing and incoming calls over the subscriber line; the setting to which state S2 corresponds signifies that the subscriber's set 2 is solely available for incoming calls; said key switch 131 receives, via the second detection signal line 11, the condition signal LCS from the loop current detector 6 and can transmit said condition signal in one of two directions which are determined by the states S1 and S2;

- a bell voltage detector 132 which emits a bell voltage detection signal BDS if bell voltage is detected on the subscriber line as an intimation of an incoming call for the subscriber's set 2. For this purpose, the input of the bell voltage detector 132 is connected to a tapping point E of the connection line 5a between the direct voltage bridge 5 and the loop voltage detector 4 (see Figure 1);

- a memory switch 133 which receives and stores, via the second detection signal line 11, the condition signal LCS and the bell voltage detection signal BDS from the bell voltage detector 132 and which only transmits a change in the condition signal LCS if no BDS detection signal is received;

- a delay circuit 134 which receives the condition signal LCS of the key switch 131 in state S2 and which then emits a change in said LCS signal with a certain time delay;

- a multiple gate switch 135 which receives the tone signal TS via the signal connection 12 and which can receive the condition signal LCS via three different routes, i.e. from the memory switch 133, from the delay circuit 134 and from the key switch 131 in setting S1; said gate switch 135 keeps the connection line 12 closed for the emission of the tone signal TS to the subscriber line (a,b) so long as the condition signal LCS received via none of the three routes mentioned indicates seizure from the subscriber's set 2.

For any extensions of the subscriber's set 2 connected in parallel and having a telephone lock, the state S1 also means that they are available for outgoing and incoming calls. The state S2, however, means that, in the event of line seizure from such an extension, said set is regarded as inserted without permission, with the consequence that the tone signal TS is generated and emitted to the subscriber line (a, b). The delay circuit 134 at the same time ensures that this emission occurs with a certain delay time, in practice approximately 1 min., with the result that a brief call nevertheless always remains possible in the case of a locked subscriber's set 2 in any emergency situations.

An incoming call is always preceded by one or more bell signals in the form of bell voltage. This is stored by the memory circuit 133 by means of the said bell voltage detection signal BDS even after the incoming call has been answered by the receiver of the subscriber's set 2 being lifted. At that instant, the loop current condition signal LCS changes, which change is now transmitted to the gate switch 135 by the memory circuit 133 if the BDS signal is present, whereupon the former interrupts the signal connection 12 so that the tone signal TS cannot be emitted to the subscriber line (a, b). If answering takes place, however, from a set 14, there is no change in the loop current condition signal LCS and the gate switch 135 remains closed, as a consequence of which the tone signal TS can be emitted to the subscriber line (a, b).

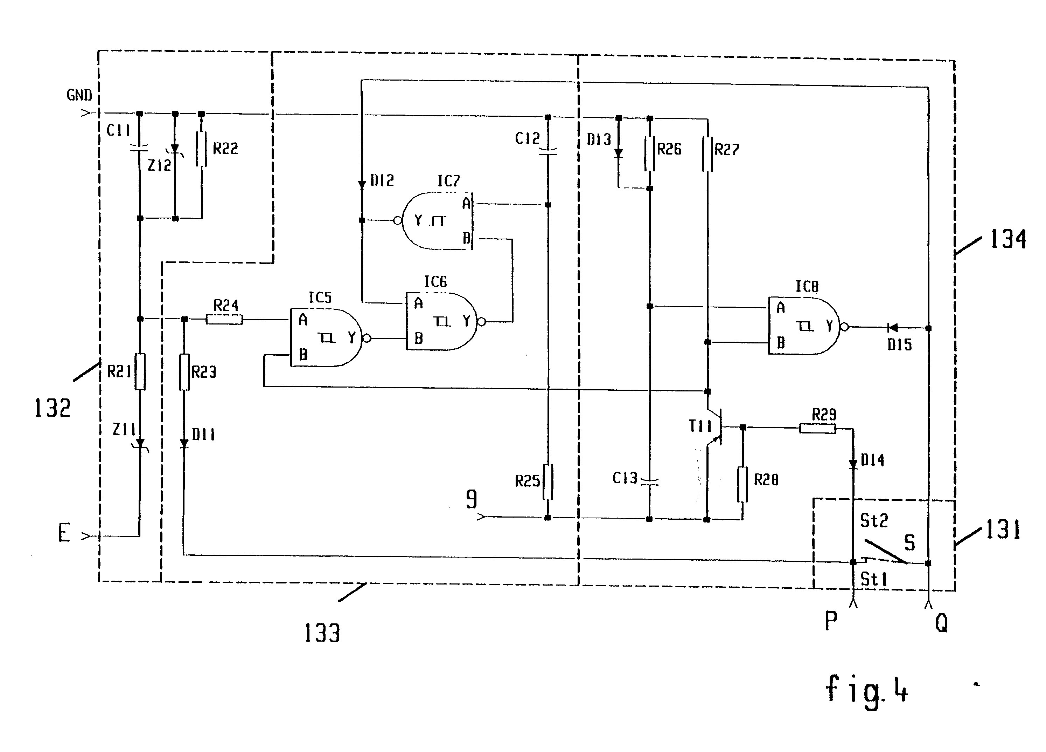

Figure 4 shows a diagram of an electronic circuit with which the functions corresponding to the block diagram according to Figure 3 can be achieved as a development in the electronic circuit according to Figure 2. For this purpose, the interconnection between points P and Q in the second detection signal line 11 is replaced by the circuit according to Figure 4 by means of the correspondingly named connects P and Q in said circuit. As a result, connector P is connected to the loop current connector 6 for receiving the loop current condition signal LCS, and the connector Q is connected to the input B of the gate IC2 with which the tone generator formed by the gates IC1 and IC2 can be switched on/off. In this diagram every group of electronic components which corresponds functionally to a block in the block diagram of Figure 2 is as far as possible framed by a broken dashed line and numbered correspondingly. In this diagram, just as in the diagram of Figure 2, four 'Schmit triggers', i.e. IC5, IC6, IC7 and IC8, each again having inputs A and B, and output Y, are arranged as NAND gates and are also connected to the supply line 9 for their supply voltage. The key switch 131 is formed by the switch S which can be in two positions St1 and St2, respectively, corresponding to the abovementioned states S1 and S2 of the key switch 131. In the position St1, the connection between the connectors P and Q is short-circuited and the circuit 1 according to the invention functions exactly as described with reference to Figure 2. The bell voltage detector 132 is incorporated between the lines E and GND and comprises zenerdiodes Z11 and Z12, capacitor C11, and resistors R21 and R22. The memory circuit 133 comprises the NAND gates IC5, IC6 and IC7, diodes D11 and D12, capacitor C12, and resistors R23, R24 and R25. The delay circuit comprises the NAND gate IC8, a transistor T11, diodes D13, D14 and D15, capacitor C13 and resistors R26, R27, R28 and R29.

If the switch S is in the position St2 and the subscriber line (a, b) is seized from the subscriber's set 2, the loop current condition signal LCS received at the connector P will turn on the transistor T11 via the diode D14 and the resistor R29. The input B of the gate IC5 is consequently fed a "1". In the meantime, the loop voltage condition signal LVS has resulted in the switching-on of the supply line 9. As a result, the capacitor C13 is charged up via the resistor R26. The voltage across the resistor R26 then starts to decrease in a time $\tau$, which is determined by the time constant of the capacitor C13 and the resistor R26, until a voltage threshold is reached which switches the output Y of the gate IC8 from "0" to "1" via the input A of said gate. Said "1" is applied to the connector Q via the diode D15. This means that the loop current condition signal LCS received at the connector P is fed to the input B of the gate IC2 (Figure 2) via the connector Q with a certain time delay which corresponds to said time $\tau$ and which is in practice chosen as approximately 1 min. That is to say that the tone signal TS is not emitted to the subscriber line (a, b) during said delay time. If the subscriber line is seized from a set 14, no LCS signal is received. In that case, switching on the supply line 9 has the result that the input B of the gate IC8 becomes "0" virtually immediately via the resistor R27 and the output Y becomes "1", and consequently the tone signal TS is emitted without appreciable delay. The diode D13 connected in parallel across the resistor R26 ensures that the capacitor C13 is able to discharge rapidly via the resistor R7 (Figure 2) when the supply line 9 is switched off when the loop voltage on the subscriber line (a, b) ceases to exist.

An incoming call is intimated on the subscriber line (a, b) by means of bell voltage (approximately 120 volts) which appears on the line during a series of short periods of approximately 1 sec each alternated by a pause period of approximately 4 sec. As a consequence of the bell voltage, current starts to flow via connector E, the zenerdiode Z11, the resistor R21 and the resistor R22. The zenerdiode Z12 is so chosen that the voltage across the capacitor C11 cannot exceed a certain value, in this case 8.2 volts. During each bell voltage period, the capacitor C11 will be charged up, after which it again discharges via the resistor R22 in the pause period subsequent thereto. At the same time, however, the voltage level on the input A of the gate IC5 remains high, i.e. "1", during the pause period via the resistor R24. If the subscriber line (a, b) is seized at such an instant, the loop voltage condition signal LVS thereupon switches on the supply line 9. There are now two possibilities. The first possibility is that seizure takes place from the subscriber's set 2 or an extension connected in parallel with it. The loop current condition signal LCS causes the transistor T11 to conduct via the connector P, as a result of which the input B of the gate IC5 also becomes high, i.e. "1", via the connection to the collector of T11. The output Y of the gate IC5 now becomes "0", and consequently, so does the input B of the gate IC6. The output of the gate IC6 then becomes "1", and consequently, so does the input B of the gate IC7. The input A of the gate IC7 has in the meantime become "1" via the resistor R25. As a result, the output Y of the gate IC7 becomes "0" and this is transmitted to the input A of the gate IC6. The output Y of gate IC6 will consequently remain "1", regardless of the state of the input B of the gate IC6. If the memory circuit 133 is activated in this way by the bell voltage in combination with the signals LVS and LCS, the output y of the gate IC7 is "0", that is to say low, and this is on the connector Q via the diode D12. The tone generator 10 (Figure 2) consequently remains switched off. If a set 14 is connected to the subscriber line (a, b) during an incoming call, the transistor T11 will indeed no longer be kept conducting as a result of the current through the optocoupler OC (Figure 2) via the connector P and the resistor R29 ceasing to exist, as a result of which the input B of the gate IC5 becomes low, i.e. "0", via the resistor R27. Because the input A of the gate IC5 was already "0" (since it only becomes "1" in the event of bell voltage), the output of the gate IC5 remains "1", with the result that the memory circuit 133 is not reset and the tone generator 10 therefore remains switched off. Where the tone signal TS is not, or indeed is, applied to the subscriber line (a, b) in such a case is, however, a choice which may depend on the circumstances in which the circuit according to the invention will be used. If it is desired that the tone signal TS is indeed applied to the subscriber line (a, b) in such a case, this can be achieved in a simple manner by coupling output Y of the gate IC7, in addition, via a suitably chosen resistor to the collector of the transistor T11 as a result of which the memory circuit is indeed reset.

The second possibility is that the seizure takes place from a set 14. In that case, the transistor T11 does not conduct since the LCS signal does not indicate seizure from the subscriber's set 2. After the supply line 9 is switched on, at least the input B of the gate IC8 remains low and consequently, the output Y remains "1", and this means that the tone generator 10 is switched on via the connector Q and the input B of the gate IC2 (Figure 2).

The circuit according to Figure 2 can be achieved with the following electronic components:

```
R1  = 25 ohm        R2  = 2M2        R3  = 2M2
R4  = 1M            R5  = 2M2        R6  = 10k
R7  = 100k          R8  = 1M         R9  = 1M
R10 = 200k          R11 = 1M         R12 = 620k
R13 = 410k          R14 = 10k        R15 = 20k
R16 = 2k            R17 = 2k


C1 = 10  nF 100V    C2 = 10  μF 10V    C3 = 68  nF 100V
C4 = 1   μF 10V     C5 = 220 nF 100V   C6 = 4.7 nF 100V
C7 = 2.2 μF 10V
```

```
D1,..,D4 = 250V 100 mA bridge cell
D5,..,D6 = BAV 20

Z1      = 30 volt zener
Z2,Z3   = 5.1 volt zener
Z4      = 180 volt zener

T1 = BCY 79C        T2       = BF 423
T3 = BF 422         IC(1,..,4) = 4093

OC = H11AA1
```

The circuit according to Figure 4 can be achieved with the following components:

EP 0 454 262 A1

| R21 | = 51k | R22 | = 1M | R23 = 10k |
| R24 | = 510k | R25 | = 510k | R26 = 1M |
| R27 | = 510k | R28 | = 51k | R29 = 51k |
| C11 | = 10$\mu$F 10V | C1 | = 68 nF | C13 = 220 $\mu$F 10V |
| D11,..,D15 | = BAV 20 | | | |
| Z11 | = 75 volt | Z12 | = 8.2V | |
| IC(5,..,8) | = 4093 | | | |

In another preferred embodiment of the invention, the line signal may be an inaudible signal possibly coded in a particular way and emitted periodically. It can then serve to control recording equipment connected elsewhere to the line or at the subscriber's premises for actually recording the detected unauthorised line usage.

Of course, the interference signal can also be coded in a particular way and used for that purpose.

## Claims

1. Electronic circuit for signalling and/or preventing improper use of a telephone subscriber line, comprising at least one loop detector in a parallel circuit across the subscriber line, which loop detector emits a first line condition signal in accordance with the seizure condition of the subscriber line, characterised in that a second loop detector is incorporated in series between the first loop detector and the connecting points for a subscriber's set, which second loop detector emits a second line condition signal in accordance with the seizure condition of the line from the subscriber's set, and in that the circuit furthermore comprises a signal generator for generating and emitting a line signal to the line depending on the first and second line condition signal.

2. Electronic circuit according to Claim 1, characterised in that switching means are provided via which the first line condition signal controls the emission of the line signal to the line depending on the second line condition signal.

3. Electronic circuit according to either of Claims 1 or 2, characterised in that the signal generator emits a line signal which comprises at least one audible interference tone.

4. Electronic circuit according to any of Claims 1,--,3, characterized in that the circuit is provided with delay means for delaying the interruption of a loop current present on the subscriber line if the signal generator is switched on.

5. Electronic circuit according to any of Claims 2,--,4, characterised in that the switching means comprise a supply switch for switching on/off a supply line for allowing supply from the subscriber line and to which supply line the signal generator is connected.

6. Electronic circuit according to Claim 5, characterised in that the supply switch is switched by the first line condition signal, and in that the switching means furthermore comprise a first gate switch sited at the output of the signal generator, which gate switch is controlled by the second line condition signal.

7. Electronic circuit according to Claim 6, characterised in that the line condition signal output of the second loop detector is coupled to a key switch circuit which corresponds to a telephone lock, and which circuit can be in states corresponding to positions of a key present in the lock, depending on which said circuit transmits the second line condition signal to the first gate switch.

8. Electronic switch according to Claim 7, characterised in that the circuit also incorporates a bell voltage detection circuit which, depending on a detected bell voltage and the second line condition signal,

9

emits a third line condition signal which concomitantly controls first gate switch.

9. Electronic circuit according to Claim 7 or 8, characterised in that the circuit comprises a delay circuit, for delaying the emission of the tone signal on the line with a preset delaytime independancy of the state of the key switch circuit.

10. Electronic circuit according to Claim 5, characterised in that the switching means comprise a control gate means for combining the first and second line condition signals to form a control signal for controlling the supply switch.

11. Electronic circuit according to Claim 1, characterised in that switching means are provided via which the second line condition signal controls the emission of the first line condition signal.

12. Electronic switch according to Claim 1, characterised in that switching means are provided via which the first line condition signal controls the emission of the signal to the line depending on the second line condition signal.

13. Electronic circuit according to any of the preceding Claims, characterised in that the first loop detector is a loop voltage detector and the second loop detector is a loop current detector.

fig.1

EP 0 454 262 A1

fig.2

EP 0 454 262 A1

fig.3

EP 0 454 262 A1

fig.4

EP 0 454 262 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 239 455 (ETAT FRANCAIS)<br>* Column 2, line 26 - column 3, line 65; figures 1-3 *<br>— — — | 1,7 | H 04 M 1/68 |
| A | PATENT ABSTRACTS OF JAPAN, vol. 14, no. 85 (E-890)[4028], 16th February 1990;<br>& JP-A-1 295 555 (TAMURA ELECTRIC WORKS LTD) 29-11-1989<br>* Abstract; figure *<br>— — — | 1 | |
| A | GB-A-2 205 216 (ALCATEL N.V.)<br>* Page 2, line 14 - page 7, line 14; figures 1,2 *<br>— — — | 1 | |
| A | EP-A-0 268 717 (CENTRAL MULTI SERVICES)<br>* Column 2, line 37 - column 5, line 36; figures 1,2 *<br>— — — | 1 | |
| D,A | EP-A-0 126 496 (ITALTEL)<br>* Page 3, line 33 - page 5, line 32; figure 1 *<br>— — — — — | 1 | |

|  |
|---|
| TECHNICAL FIELDS SEARCHED (Int. Cl.5) |
| H 04 M |

The present search report has been drawn up for all claims

| Place of search | Date of completion of search | Examiner |
|---|---|---|
| The Hague | 09 July 91 | DELANGUE P.C.J.G. |